Europäisches Patentamt

European Patent Office

Office européen des brevets

(19)

(11) Veröffentlichungsnummer : **0 129 715**
**B1**

(12) **EUROPÄISCHE PATENTSCHRIFT**

(45) Veröffentlichungstag der Patentschrift :
21.01.87

(21) Anmeldenummer : 84105855.5

(22) Anmeldetag : 23.05.84

(51) Int. Cl.⁴ : **F 16 K 47/02**

(54) Geräuscharmes Ventil für Sanitärarmaturen.

(30) Priorität : 25.05.83 DE 3318888
08.10.83 DE 3336672

(43) Veröffentlichungstag der Anmeldung :
02.01.85 Patentblatt 85/01

(45) Bekanntmachung des Hinweises auf die Patenterteilung : 21.01.87 Patentblatt 87/04

(84) Benannte Vertragsstaaten :
AT CH DE FR GB LI SE

(56) Entgegenhaltungen :
DE-A- 2 838 195
DE-A- 2 918 430
DE-A- 3 012 547
FR-A- 2 485 147
US-A- 3 664 369

(73) Patentinhaber : FRIEDRICH GROHE ARMATURENFA-
BRIK GmbH & CO
Hauptstrasse 137
D-5870 Hemer 1 (DE)

(72) Erfinder : Pawelzik, Manfred
Herringser Weg 5a
D-4770 Soest (DE)
Erfinder : Stiller, Klaus
Ihmerter Strasse 60
D-5990 Altena 8 (DE)
Erfinder : Berg, Burkhard
Kornblumenweg 52
D-5750 Menden 1 (DE)

Jouve, 18, rue St-Denis, 75001 Paris, France

**Beschreibung**

Die Erfindung betrifft ein Ventil, insbesondere Mischventil, für Sanitärarmaturen mit den im Oberbegriff des Anspruchs 1 angegebenen Merkmalen.

Diese Ventile werden vielfach im Sanitärbereich eingesetzt, wobei die aneinanderliegenden Scheiben meist aus geglätteter, verschleißfester und harter Oxidkeramik hergestellt sind.

Zur Reduzierung der im wesentlichen in den engen Durchtrittsquerschnitten innerhalb des Ventils auftretenden Fließgeräuschen des durchströmenden Wassers ist es bekannt, in diesen Ventilbereichen Siebe anzuordnen (siehe z. B. DE-A-2 918 430).

Der Erfindung liegt die Aufgabe zugrunde, einen verbesserten, einfach herstellbaren und sicher am Einsatzort halterbaren Siebeinsatz für ein Ventil der im Oberbegriff des Anspruchs 1 angegebenen Art zu schaffen, wobei der Siebeinsatz bei guter Geräuschminderung relativ unempfindlich gegen Verschmutzung und damit verbundener Verringerung der Ventildurchflußleistung sein sollte.

Diese Aufgabe wird erfindungsgemäß durch die im kennzeichnenden Teil des Anspruchs 1 angegebenen Merkmale gelöst. Weitere Ausgestaltungen der Erfindung sind in den Ansprüchen 2 bis 9 angegeben.

Ausführungsbeispiele der Erfindung sind in der Zeichnung dargestellt und werden im folgenden näher beschrieben. Es zeigt

Figur 1 ein Mischventil als Baueinheit im Längsschnitt, wie es komplett in Sanitärarmaturen eingesetzt werden kann ;

Figur 2 das Mischventil gemäß Figur 1 um 90° gedreht ;

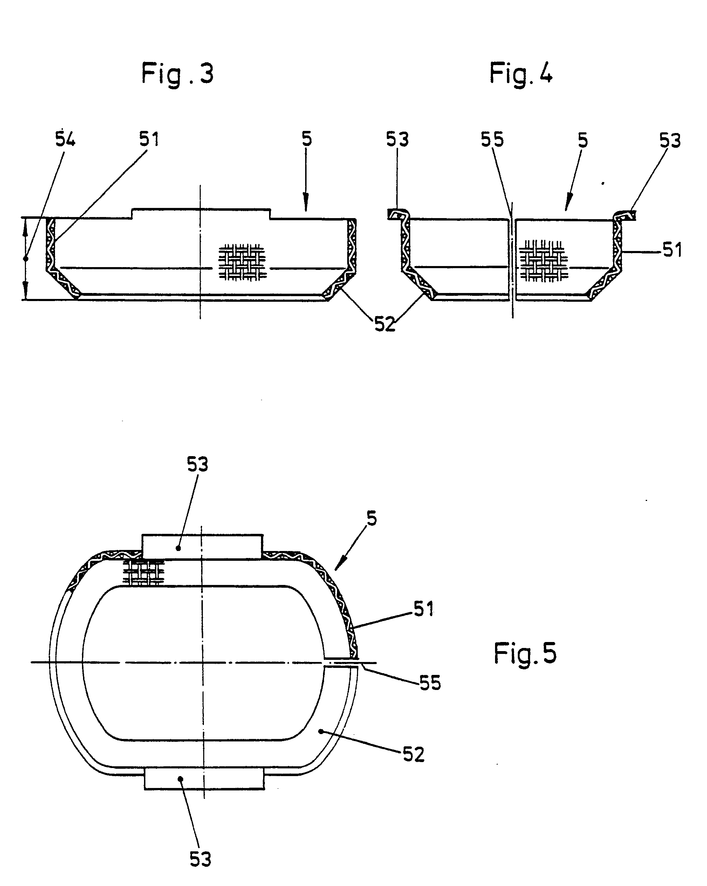

Figur 3 einen Siebeinsatz im Längsschnitt ;

Figur 4 den Siebeinsatz gemäß Figur 3 um 90° gedreht ;

Figur 5 den Siebeinsatz gemäß Figur 3 in Draufsicht ;

Figur 6 das Mischventil gemäß Figur 1 mit einem anderen Siebeinsatz ;

Figur 7 den Siebeinsatz gemäß Figur 6 in vergrößerter Darstellung ;

Figur 8 den Siebeinsatz gemäß Figur 7 um 90° gedreht ;

Figur 9 den Siebeinsatz gemäß Figur 7 in Draufsicht.

Der Einfachheit halber sind bei den Ausführungsbeispielen in der Zeichnung gleiche oder entsprechende Elemente mit jeweils gleichen Bezugszeichen versehen.

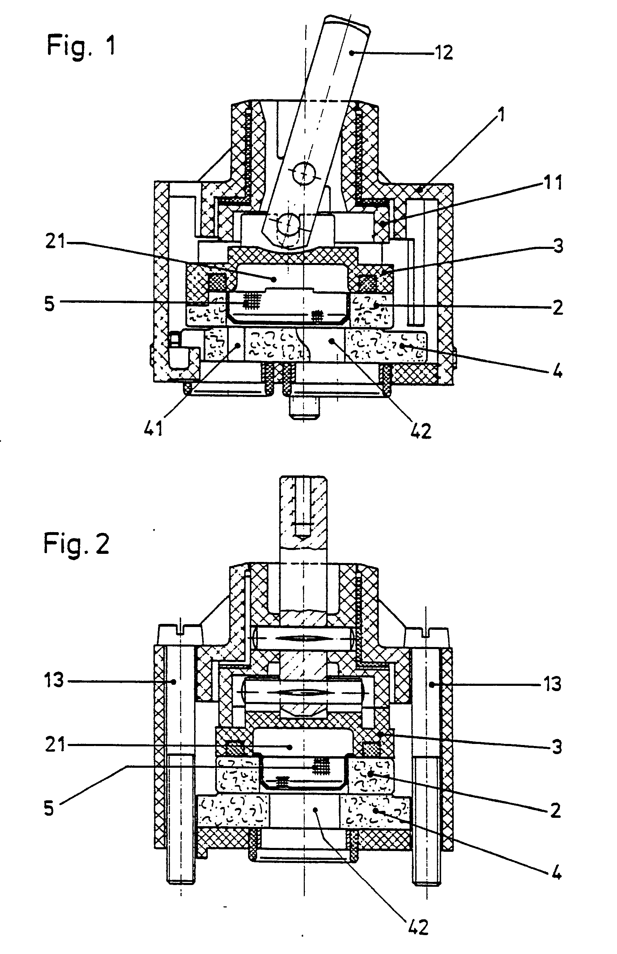

Das mit den Figuren 1 und 2 dargestellte Mischventil für Kalt- und Warmwasser ist in einem Ventilgehäuse 1 gekapselt angeordnet. Das Ventilgehäuse 1 dient als Ventilkartusche, die in Sanitärarmaturen mit einer entsprechend ausgebildeten Aufnahmeöffnung eingefügt werden kann. Das Ventilgehäuse 1 wird dabei mit Hilfe von Befestigungsschrauben 13 mit den Zu- und Abflußleitungen für Kalt-, Warm- und Mischwasser der in der Zeichnung nicht dargestellten Sanitärarmatur verbunden.

In dem Ventilgehäuse 1 ist eine Festscheibe 4 mit je einer Einlaßöffnung 41 für Kalt- und Warmwasser und einer Auslaßöffnung 42 für Mischwasser angeordnet. An der ortsfest im Ventilgehäuse 1 gehalterten Festscheibe 4 ist eine Steuerscheibe 2 mit einem Überströmkanal 21 für das durchströmende Wasser angelagert. Beide Scheiben, Festscheibe 4 und Steuerscheibe 2, sind aus einem verschleißfesten Keramikmaterial hergestellt und liegen mit ihren durch entsprechende Feinstbearbeitung geglätteten Stirnflächen wasserdicht aneinander. Der Überströmkanal 21 ist in der Steuerscheibe 2 als glatter Durchbruch ausgebildet und wird an der äußeren Stirnfläche von einer Abdeckhaube 3 verschlossen, welche gleichzeitig formschlüssig mit der Steuerscheibe 2 verbunden ist und welche die mit Hilfe eines Stellhebels 12 und eines Drehgliedes 11 erzeugte Führungs- bzw. Stellgröße auf die zur Festscheibe 4 beweglich gehalterte Steuerscheibe 2 überträgt. Mit dem Überströmkanal 21 kann somit wahlweise die Mischung von Kalt- und Warmwasser und die Bestimmung der Gesamtdurchflußmenge durch entsprechende Überdeckung der Einlaß- und Auslaßöffnungen erzielt werden.

Zur Reduzierung der Fließgeräusche in dem Mischventil ist ein Sieb 5 in dem Überströmkanal 21 angeordnet. Das Sieb ist dabei mantelförmig ausgebildet und kann von außen im Bereich der Seitenwandung in den Überströmkanal 21 eingeschoben werden. Das Sieb 5 ist dabei mit einer Siebwandung 51 versehen, die etwa parallel zur Seitenwandung des Überströmkanals 21 ausgebildet ist. An der der Festscheibe 4 zugekehrten Stirnseite des Siebes 5 ist ein Rand 52 ausgebildet, der schräg nach innen um etwa 45° eingezogen ist. Das als Mantel geformte Sieb 5 wird etwa zu zwei Drittel in seiner Länge 54 von der Siebwandung 51 und einem Drittel von dem Rand 52 gebildet. Das Sieb 5 trägt außerdem an der dem Rand 52 gegenüberliegenden Stirnseite im Längsseitenbereich nach außen gekantete Haltelappen 53.

Das Sieb 5 kann sowohl aus einem Flachmaterialstreifen gebogen als auch aus einer Ronde gestanzt werden. Bei dem Biegevorgang wird zweckmäßig die Stoßfuge 55 im Bereich der Auslaßöffnung 42 angeordnet. Beim Zusammenfügen des Mischventils kann in einfacher Weise zunächst das Sieb 5 von außen in den Überströmkanal 21 der Steuerscheibe 2 bis zum Anschlag der Haltelappen 53 eingeschoben werden und danach durch das Auflegen der Abdeckhaube 3 in seiner Stecklage sicher und formschlüssig gehalten werden.

Das in dem Überströmkanal 21 eingefügte Sieb 5 bildet mit seinem Rand 52 an der Seitenwandung einen Siebrahmen, während die Bodenfläche im wesentlichen siebfrei ist. Versuche haben gezeigt, daß mit dieser Siebausbildung eine wesentliche Reduzierung der Fließgeräusche erreicht werden kann. Durch den siebfreien Bereich im Überströmkanal 21 wird dabei sichergestellt, daß die maximale Durchflußleistung des Mischventils nur unwesentlich beeinträchtigt wird und darüber hinaus durch den schräg eingezogenen Bereich an der der Festscheibe zugekehrten Stirnseite im Wasser mitgeführte Partikel etc. aus dem Sieb wieder herausgeschwemmt werden können.

Als besonders günstig hat sich ein Sieb 5 aus Drahtgeflecht im Versuch gezeigt, dessen Drahtdurchmesser etwa 0,32 mm und dessen Maschenweite etwa 0,5 mm beträgt.

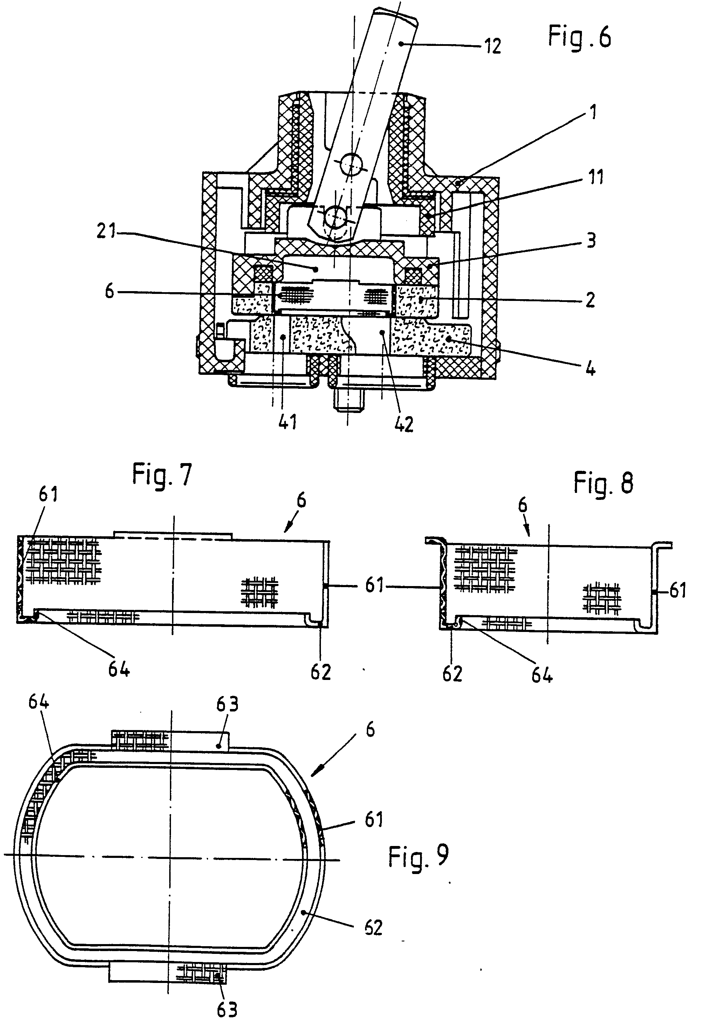

Das in den Figuren 6 bis 9 dargestellte Mischventil entspricht im wesentlichen dem ersten Ausführungsbeispiel. Zur Reduzierung der Fließgeräusche in dem Mischventil ist jedoch ein anders geformtes Sieb 6 in dem Überströmkanal 21 angeordnet. Das Sieb ist dabei ebenfalls mantelförmig ausgebildet und kann von außen im Bereich der Seitenwandung in den Überströmkanal 21 eingeschoben werden. Das Sieb 6 ist mit einer Siebwandung 61 versehen, die etwa parallel zur Seitenwandung des Überströmkanals 21 ausgebildet ist. An der der Festscheibe 4 zugekehrten Stirnseite des Siebes 6 ist ein Rand 62 ausgebildet, der um 90° abgewinkelt in dem Überströmkanal 21 vorsteht. Die hierdurch parallel zur Festscheibe 4 geformte Siebringfläche ist an der Siebwandung 61 derart angeordnet, daß sie in der Nähe oder direkt an der Festscheibe 4 anliegt. Der Rand 62 kragt soweit vor, daß er bei voll geöffnetem Ventil etwa die Hälfte der Einlaßöffnungen 41 überdeckt. Außerdem trägt er im freien Endbereich eine Bördelkante 64. Das Sieb 6 hat ferner an der dem Rand 62 gegenüberliegenden Stirnseite im Längsseitenbereich nach außen gekantete Haltelappen 63.

Dieses Sieb 6 kann ebenfalls sowohl aus einem Flachmaterialstreifen gebogen als auch aus einer Ronde gestanzt werden. Bei dem Biegevorgang wird zweckmäßig die Stoßfuge im Bereich der Auslaßöffnung 42 angeordnet. Auch beim Zusammenfügen des Mischventils kann zunächst das Sieb 6 von außen in den Überströmkanal 21 der Steuerscheibe 2 bis zum Anschlag der Haltelappen 63 eingeschoben werden und danach durch das Auflegen der Abdeckhaube 3 in seiner Stecklage sicher und formschlüssig gehalten werden.

Das in dem Überströmkanal 21 eingefügte Sieb 6 bildet mit seinem Rand 62 an der Seitenwandung einen Siebrahmen, während die Bodenfläche im wesentlichen siebfrei ist. Durch den siebfreien Bereich im Überströmkanal 21 wird sichergestellt, daß die maximale Durchflußleistung des Mischventils nur unwesentlich beeinträchtigt wird. Darüber hinaus ermöglicht diese Ausbildung, daß im Wasser mitgeführte Partikel etc. aus dem Sieb wieder herausgeschwemmt werden können. Um ein Ausfasern des Siebgeflechts im vorkragenden Bereich des Randes 62 durch das strömende Wasser zu vermeiden, ist an dem freien Ende die Bördelkante 64 parallel zur Siebwandung 61 ausgebildet. Die Bördelkante 64 bewirkt außerdem eine erhöhte Stabilität des vorkragenden Siebteils.

**Patentansprüche**

1. Ventil, insbesondere Mischventil, für Sanitärarmaturen, mit einer Festscheibe (4), die mindestens eine Wassereinlaßöffnung (41) enthält, mit einer zur Festscheibe beweglich angeordneten Steuerscheibe (2), die mit wenigstens einem als Durchbruch geformten Überströmkanal (21) versehen ist und deren von der Festscheibe abgekehrte Stirnseite von einer Abdeck- und Führungshaube (3) gehaltert ist, und einem im Überströmkanal angeordneten Sieb (5) zur Fließgeräuschminderung, dadurch gekennzeichnet, daß das Sieb (5) etwa parallel zur Seitenwandung des Überströmkanals (21) als Mantel angeordnet und im Bereich der Trennfuge von Steuerscheibe (2) und Abdeckhaube (3) formschlüssig gehaltert ist, wobei der der Festscheibe (4) zugekehrte Bereich des Seibes (5) mit einem in den Überströmkanal (21) vorstehenden Rand (52) versehen ist.

2. Ventil nach Anspruch 1, dadurch gekennzeichnet, daß das als Mantel geformte Sieb (5) etwa zu zwei Dritteln seiner Länge (54) parallel zur Seitenwandung des Überströmkanals (21) und auf einem Drittel seiner Länge (54) um etwa 45° geneigt in den Überströmkanal (21) hineingezogen ausgebildet ist.

3. Ventil nach Anspruch 1, dadurch gekennzeichnet, daß der Rand (62) um 90° abgewinkelt und die parallel zur Festscheibe (4) gebildete Siebringfläche nahe der Festscheibe (4) oder an der Festscheibe (4) anliegend angeordnet ist.

4. Ventil nach den Ansprüchen 1 bis 3, dadurch gekennzeichnet, daß das Sieb (5) einen oder mehrere über den Überströmkanal (21) vorstehende Haltelappen (53) zur Begrenzung der Einsenktiefe in den Überströmkanal (21) hat und von der entsprechend geformten Abdeckhaube (3) formschlüssig im zusammengefügten Zustand im Überströmkanal (21) gehalten ist.

5. Ventil nach Anspruch 3, dadurch gekennzeichnet, daß der Rand (62) bei voll geöffnetem Ventil etwa die Hälfte der oder die Einlaßöffnungen (41) überdeckt.

6. Ventil nach den Ansprüchen 3 oder 5, dadurch gekennzeichnet, daß der Rand (62) an seinem frei vorkragenden Ende eine Bördelkante (64) parallel zur Siebwandung (61) hat.

7. Ventil nach den Ansprüchen 1 bis 6, dadurch gekennzeichnet, daß das Sieb (5) aus Flachmaterial geformt ist und die Stoßfuge (55) der Stirnseiten im Bereich der Auslaßöffnung (42) angeordnet ist.

8. Ventil nach den Ansprüchen 1 bis 6, dadurch gekennzeichnet, daß das Sieb (5) aus einer Ronde im Stanz- oder Ziehverfahren geformt ist.

9. Ventil nach den Ansprüchen 1 bis 8, dadurch gekennzeichnet, daß das Sieb (5) aus einem

3

Drahtgeflecht mit einem Drahtdurchmesser von etwa 0,3 bis 0,5 mm und einer Maschenweite von etwa 0,3 bis 0,6 mm hergestellt ist.

## Claims

1. Valve, especially a mixer valve, for sanitary fittings, having a fixed disc (4) which contains at least one water-inlet opening (41), a control disc (2) which is arranged in such a manner that it can be moved relative to the fixed disc and is provided with at least one overflow channel (21) in the form of an opening and the end face of which remote from the fixed disc is held by a covering and guiding hood (3), and a screen (5), arranged in the overflow channel, for reducing flow noise, characterised in that the screen (5) is arranged approximately parallel to the side wall of the overflow channel (21) in the form of a casing and is held positively in the region where the control disc (2) and the covering hood (3) meet, the region of the screen (5) facing the fixed disc (4) being provided with a rim (52) that projects into the overflow channel (21).

2. Valve according to claim 1, characterised in that the screen (5) which is in the form of a casing is so designed that over approximately two-thirds of its length (54) it is parallel to the side wall of the overflow channel (21) and over a third of its length (54) is inclined approximately 45° into the overflow channel (21).

3. Valve according to claim 1, characterised in that the rim (62) is bent at an angle of 90° and the annular surface of the screen that is formed parallel to the fixed disc (4) is arranged so that it lies on or near the fixed disc (4).

4. Valve according to claims 1 to 3, characterised in that the screen (5) has one or more holding tabs (53) projecting beyond the overflow channel (21) for limiting the depth to which it can be sunk into the overflow channel (21) and is held by the appropriately shaped covering hood (3) in a positive manner in the overflow channel (21) in the assembled state.

5. Valve according to claim 3, characterised in that the rim (62) covers approximately half of the inlet opening or openings (41) when the valve is fully open.

6. Valve according to claim 3 or 5, characterised in that the rim (62) has a turned-over edge (64) on its freely projecting end, parallel to the screen wall (61).

7. Valve according to claims 1 to 6, characterised in that the screen (5) is made of flat material and the gap (55) at the joint between the ends is arranged in the region of the outlet opening (42).

8. Valve according to claims 1 to 6, characterised in that the screen (5) is made from a blank by punching or drawing.

9. Valve according to claims 1 to 8, characterised in that the screen (5) is manufactured from wire mesh having a wire diameter of approximately from 0.3 to 0.5 mm and a mesh width of approximately from 0.3 to 0.6 mm.

## Revendications

1. Soupape notamment soupape de mélangeur pour robinet à usage sanitaire comportant un disque fixe (4) avec au moins un orifice d'entrée d'eau (41), un disque de commande (2) mobile par rapport au disque fixe et qui comporte au moins un canal de débordement (21) en forme de passage, et dont la face frontale opposée à celle du disque fixe est maintenue par une coiffe de recouvrement et de guidage (3) et une crépine (5) placée dans le canal de débordement pour réduire le bruit de l'écoulement, caractérisée en ce que la crépine (5) est placée comme enveloppe sensiblement parallèlement à la paroi latérale du canal de débordement (21) et est maintenue au niveau du joint de séparation du disque de commande (2) et de la coiffe de recouvrement (3) par une liaison par la forme, la zone de la crépine (5) tournée vers le disque fixe (4) étant munie d'un bord (52) en saillie par rapport au canal de débordement (21).

2. Soupape selon la revendication 1, caractérisée en ce que la crépine (5) en forme d'enveloppe est sur environ deux tiers de sa longueur (54) parallèle à la paroi latérale du canal de débordement (21) et sur un tiers de sa longueur (54) inclinée d'environ 45° en étant intégrée dans le canal de débordement (21).

3. Soupape selon la revendication 1, caractérisée en ce que le bord (62) est recourbé à 90° et la surface annulaire de la crépine est parallèle au disque fixe (4) en étant située au voisinage du disque fixe (4) ou appliquée sur le disque fixe (4).

4. Soupape selon les revendications 1 à 3, caractérisée en ce que la crépine (5) comporte une ou plusieurs pattes de retenue (53) dépassant du canal de débordement (21) pour limiter la profondeur de pénétration dans le canal de débordement (21) et est maintenue par la coiffe de recouvrement (3), de forme appropriée, par une liaison par la forme, à l'état réuni dans le canal de débordement (21).

5. Soupape selon la revendication 3, caractérisée en ce que lorsque la soupape est complètement ouverte, le bord (62) recouvre sensiblement la moitié du ou des orifices d'entrée (41).

6. Soupape selon les revendications 3 ou 5, caractérisée en ce que le bord (62) présente à son extrémité librement en saillie, une arête rabattue (64) parallèle à la paroi (61) de la crépine.

7. Soupape selon les revendications 1 à 6, caractérisée en ce que la crépine (5) est réalisée à partir d'un matériau plat et le joint (55) des faces frontales est prévu au niveau de l'orifice de sortie (42).

8. Soupape selon les revendications 1 à 6, caractérisée en ce que la crépine (5) est formée à partir d'un rond par matriçage ou étirage.

9. Soupape selon les revendications 1 à 8, caractérisée en ce que la crépine (5) est réalisée en un tissu de fils avec un diamètre de fils compris sensiblement entre 0,3 et 0,5 mm et une largeur de mailles comprise sensiblement entre 0,2 et 0,6 mm.

Fig. 1

Fig. 2

Fig. 3

54  51                    5

52

Fig. 4

53    55    5         53

51

52

53

5

51

55

Fig. 5

52

53

Fig .6

Fig. 7

Fig. 8

Fig. 9